# EUROPEAN PATENT APPLICATION

(11) **EP 3 664 061 A1**
(43) Date of publication of application: **10.06.2020**
(21) Application number: 18210472.9
(22) Date of filing: 05.12.2018
(51) Int. Cl.: G08G 1/0967, B62D 15/02, G08G 1/16

(54) **SOLUTION FOR CONTROLLING AN AT LEAST PARTIALLY AUTONOMOUS VEHICLE**

(71) Applicant: VOLKSWAGEN AKTIENGESELLSCHAFT, 38440 Wolfsburg (DE)
(72) Inventor: Buburuzan, Dr. Teodor, 38118 Braunschweig (DE); Kwoczek, Andreas, 38165 Lehre (DE); Schmitz, Steffen, 46485 Wesel (DE)

(57) **Abstract**

A method, a computer program, and a control unit for controlling an at least partially autonomous vehicle. In a first step, a control unit external to the vehicle receives (10) environment data from at least one sensor unit external to the vehicle. The control unit further receives (11) environment data from at least one sensor unit of the vehicle. Optionally, after receiving the data, information received from a sensor unit may be verified (12) based on information received from at least one other sensor unit. Furthermore, information received from two or more sensor units may be fused (13) by the control unit. Based at least on the received environment data the control unit determines (14) maneuvering information for the vehicle. This maneuvering information is then transmitted (15) to the vehicle.

## Description

The present disclosure is related to a method, a computer program, and a control unit for controlling an at least partially autonomous vehicle. More particularly, a solution is presented for providing maneuvering information to the vehicle.

In the following years, more and more vehicles will be able to handle an increasing number of situations automatically, without a direct intervention of the driver. In order to handle these situations, the automatic vehicles will be equipped with an increasingly high number of sensors, like ultra-sound sensors, laser scanners, radar sensors, lidar sensors,
cameras, etc. These sensors are used to scan the environment of the vehicle and make this information available to algorithms responsible for moving the autonomous or semiautonomous vehicle safely inside in its environment.

Most current applications focus on handling various driving scenarios and parking scenarios. Handling these scenarios is based on the principle that the autonomous or semiautonomous vehicles use the sensor information they gather by themselves and decide on the best appropriate maneuver for the vehicle. Also mechanisms around the topic of collective perception have been proposed, where external entities are used, like roadside units or other vehicles. These external entities provide their sensor-information to the autonomous or semiautonomous vehicles for increasing their sensor-rage and practically allowing them to "see-through-the-eyes-of-others", e.g. using vehicle-to-everything (V2X) communication technologies, such as IEEE802.11p or 3GPP C-V2X.

A special case of automatic driving scenarios are those where external entities at least partially assume control of the autonomous or semiautonomous vehicles. Such scenarios are at present mainly encountered in the field of managed parking spaces. For example, in order to transfer a vehicle to a target position, a central processing unit of the parking facility determines a trajectory, which is provided to the autonomous or semiautonomous vehicle. The vehicle then moves autonomously along this trajectory.

For example, DE 10 2016 003 231 A1 discloses a method for driving a motor vehicle at least partially autonomously. Said motor vehicle and/or the surroundings thereof are detected by at least one sensor device and the movement information controlling the movement of the motor vehicle is determined by a calculation device external to the motor vehicle and transmitted to the motor vehicle. The movement information is determined in accordance with at least one item of information relating to the maneuvering capacity of the motor vehicle and/or the detection capability of the sensor device.

Though the vehicle drives autonomously along the predetermined trajectory, in some scenarios the central processing unit may influence this movement to a certain extent, e.g. by controlling the vehicle speed.

In this regard DE 10 2012 222 562 A1 discloses a system for managed parking spaces for transferring a vehicle from a start position to a target position. The system has a fixedly arranged central processing unit for calculating a movement path along which the vehicle moves autonomously at a vehicle speed from the start position to the target position. A transmission unit is provided for transmission of the movement path to the vehicle. The central processing unit is configured to generate speed control signals and to pass the speed control signals to the transmission unit for transmission to the vehicle so that the vehicle moves with different vehicle speeds different from zero, controlled by the speed control signals, along the movement path.

In yet other scenarios, an external entity may assume full control of an autonomous or semiautonomous vehicle. This might be the case due to various motives, e.g. legal obligations or precautions, the availability of control information, etc., and includes scenarios like automatic parking inside a parking facility or moving a vehicle through a car wash. In such scenarios, the external entity uses information obtained through a plurality of sensors that are provided as part of the infrastructure of the respective facility, like radar sensors, lidar sensors, or cameras.

For example, DE 10 2017 107 701 A1 discloses a method for the remote-controlled maneuvering of a motor vehicle on a parking area by means of an off-board parking space side infrastructure device. Position data of the motor vehicle on the parking area is determined by the infrastructure device. A communication channel is established starting from the infrastructure device in the direction of the motor vehicle. A longitudinal guide and a transverse guide of the motor vehicle are taken over by the infrastructure device via the communication channel for remote control of the motor vehicle. The motor vehicle is then maneuvered on the parking area in dependence on the position data of the motor vehicle.

It is an object of the present invention to provide an improved solution for controlling an at least partially autonomous vehicle.

This object is achieved by a method according to claim 1, a corresponding computer program according to claim 8, a corresponding control unit according to claim 9, and a system according to claim 10. The dependent claims include advantageous further developments and improvements of the invention as described below.

In a first aspect, a method for controlling an at least partially autonomous vehicle, the method being implemented in a control unit external to the vehicle, comprises the steps of:
- receiving environment data from at least one sensor unit external to the vehicle;
- receiving environment data from at least one sensor unit of the vehicle;
- determining maneuvering information for the vehicle based at least on the received environment data; and
- transmitting the maneuvering information to the vehicle.

In a second aspect, a computer program comprises instructions, which, when executed by the computer, cause the computer to perform the following steps for controlling an at least partially autonomous vehicle:
- receiving environment data from at least one sensor unit external to the vehicle;
- receiving environment data from at least one sensor unit of the vehicle;
- determining maneuvering information for the vehicle based at least on the received environment data; and
- transmitting the maneuvering information to the vehicle.

The term computer is to be understood broadly. It may likewise include workstations, distributed processing solutions or other processing units.

The computer program may, for example, be provided for download or stored on a computer-readable storage medium.

In a third aspect, a control unit for controlling an at least partially autonomous vehicle comprises:
- a receiving unit configured to receive environment data from at least one sensor unit external to the vehicle and to receive environment data from at least one sensor unit of the vehicle;
- a processing unit configured to determine maneuvering information for the vehicle based at least on the received environment data; and
- a transmission unit configured to transmit the maneuvering information to the vehicle.

It has been found that in many scenarios there are areas inside the facility that in certain situations cannot be fully covered by the external sensors. Furthermore, in some situations the accuracy and resolution provided by the sensors is insufficient. In such situations it is difficult or even impossible to make the optimal decision. In order to address this issue, the invention proposes to make use of at least one sensor unit of the vehicle to be controlled in addition to the available external sensor units. This allows the external entity to "zoom-in" around each individual autonomous or semiautonomous vehicle using the rather dense sensor coverage of the vehicle environment provided by the on-board sensors.

In one embodiment, the sensor unit external to the vehicle is a sensor unit of a further vehicle or a sensor unit of a vehicle service facility, e.g. a parking facility, a car wash, a filling station or a charging station for electric vehicles. In addition to the at least one sensor unit of the vehicle to be controlled, also sensor units of other stationary or moving vehicles inside the facility may be accessed. In this way, it becomes possible to not only to "zoom-in" around a given vehicle, but to evaluate a situation from different angles. This further improves the reliability of the determined maneuvering information. If appropriate, the sensor units of the external entity may even be fully replaced with the on-board sensor units of the vehicles.

In one embodiment, the maneuvering information includes at least one of a trajectory, speed information and steering information. The proposed solution can advantageously be used with all scenarios described above, i.e. irrespective of whether the vehicle movement is fully or only partially controlled by the external entity. Depending on the level of control, suitably specific or strict instructions are conveyed by the maneuvering information.

In one embodiment, information received from a sensor unit is verified based on information received from at least one other sensor unit. For example, distance information obtained with a stationary external distance sensor may be verified using distance measurements performed by distance sensors of stationary or moving vehicles. In this way, the overall reliability of the sensor data is improved.

In one embodiment, information received from two or more sensor units is fused. In this way, the accuracy of a measurement may be increased. For example, if two vehicles are parked close to one another and both provide a measurement for the distance between them, the external entity can corroborate this information stemming from two unrelated sources and have a maximum accuracy for that individual location.

In one embodiment, the sensor unit is one of a camera, a laser scanner, a radar sensor, a lidar sensor, and an ultra-sound sensor. These types of sensor units are readily available on the market and will generally be available in autonomous or semiautonomous vehicles. They enable obtaining a high-resolution model of the vehicle environment and are thus well suited for use with the proposed solution.

Further features of the present invention will become apparent from the following description and the appended claims in combination with the drawings.
- Fig. 1: shows a flowchart of an exemplary method for controlling an at least partially autonomous vehicle;
- Fig. 2: schematically illustrates a block diagram of a first embodiment of a control unit for controlling an at least partially autonomous vehicle;
- Fig. 3: schematically illustrates a block diagram of a first embodiment of a control unit for controlling an at least partially autonomous vehicle;
- Fig. 4: shows a vehicle suitable for use with the described solution; and
- Fig. 5: schematically illustrates a system diagram of a solution for controlling an at least partially autonomous vehicle.

For a better understanding of the principles of the present invention, exemplary embodiments of the invention are explained in more detail below with reference to the figures. Of course, the invention is not limited to those embodiments. It is to be understood that many other possible modifications and variations can be made without departing from the scope of the present invention as defined by the appended claims.

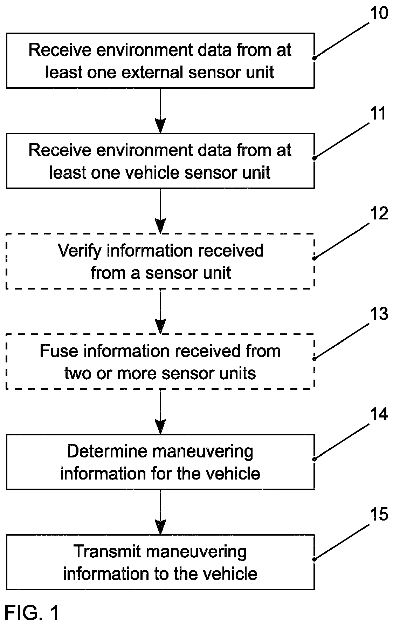

In Fig. 1, a flowchart of an exemplary method for controlling an at least partially autonomous vehicle is shown. In a first step, a control unit external to the vehicle receives 10 environment data from at least one sensor unit external to the vehicle. This sensor unit may be a sensor unit of a further vehicle or a sensor unit of a vehicle service facility, e.g. a parking facility, a car wash, a filling station or a charging station for electric vehicles. The control unit further receives 11 environment data from at least one sensor unit of the vehicle. Optionally, after receiving the data, information received from a sensor unit may be verified 12 based on information received from at least one other sensor unit. Furthermore, information received from two or more sensor units may be fused 13 by the control unit. Based at least on the received environment data the control unit determines 14 maneuvering information for the vehicle. The maneuvering information may, for example, include a trajectory, speed information or steering information. This maneuvering information is then transmitted 15 to the vehicle.

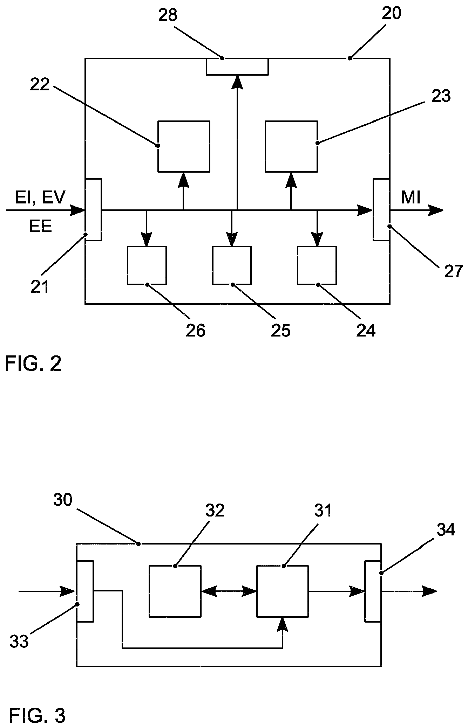

A block diagram of a first embodiment of a control unit 20 for controlling an at least partially autonomous vehicle is illustrated in Fig. 2.

The control unit 20 has a receiving unit 22 configured to receive environment data EI, EV from at least one sensor unit external to the vehicle via an input 21. This sensor unit may be a sensor unit of a further vehicle or a sensor unit of a vehicle service facility, e.g. a parking facility, a car wash, a filling station or a charging station for electric vehicles. The receiving unit 22 is further configured to receive environment data EE from at least one sensor unit of the vehicle via the input 21. A processing unit 23 determines maneuvering information MI for the vehicle based at least on the received environment data EE, EI, EV. The maneuvering information may, for example, include a trajectory, speed information or steering information. The maneuvering information MI is transmitted to the vehicle by a transmission unit 24 via an output 27. Optionally, the receiving unit 22 or the processing unit 23 may be configured to verify information received from a sensor unit based on information received from at least one other sensor unit. They likewise may be configured to fuse information received from two or more sensor units.

The receiving unit 22, the processing unit 23, and the transmission unit 24 may be controlled by a controller 25. A user interface 28 may be provided for enabling a user to modify settings of the various units 22, 23, 24 or the controller 25. The data available in the control unit 20 may be stored in a local storage unit 26, e.g. for a later evaluation or for use by the various components of the control unit 20. The different units 22, 23, 24 and the controller 25 can be embodied as dedicated hardware units. Of course, they may likewise be fully or partially combined into a single unit or implemented as software running on a processor, e.g. a GPU or a CPU. The output 27 may also be combined with the input 21 into a single bidirectional interface.

A block diagram of a second embodiment of a control unit for controlling an at least partially autonomous vehicle is illustrated in Fig. 3.

The control unit 30 comprises a processing device 31 and a memory device 32 storing instructions that, when executed, cause the control unit 30 to perform steps according to one of the described methods.

For example, the processing device 31 can be a processor adapted to perform the steps according to one of the described methods. In an embodiment according to the present principles, said adaptation comprises that the processor is configured, e.g. programmed, to perform steps according to one of the described methods.

A processor as used herein may include one or more processing units, such as microprocessors, digital signal processors, or a combination thereof.

The control unit 30 has an input 33 for receiving data, e.g. from a plurality of sensor units. Data generated by the processing device 31 are made available at an output 34. They may likewise be stored in the memory device 32. The input 33 and the output 34 may be combined into a bidirectional interface.

The local storage unit 26 and the memory device 32 may include volatile and/or non-volatile memory regions and storage devices such as hard disk drives and DVD drives. A part of the memory is a non-transitory program storage device readable by the processing device 31, tangibly embodying a program of instructions executable by the processing device 31 to perform program steps as described herein according to the present principles.

In an embodiment, a computer program comprises program code, which, when executed by a computing system, causes the computing system to perform the method according to the present principles.

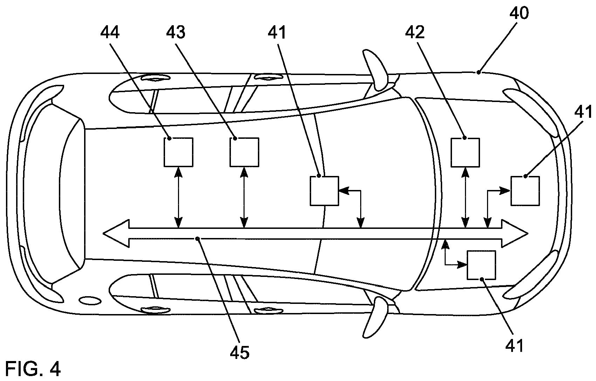

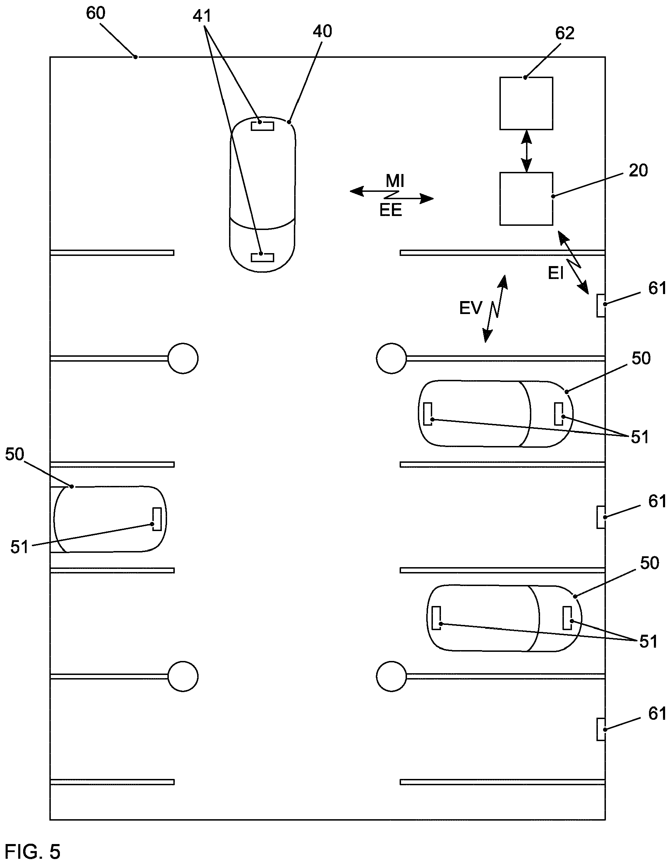

In the following, a preferred embodiment of the invention shall be described in more detail with reference to Fig. 4 and Fig. 5.

Fig. 4 shows an autonomous or semiautonomous vehicle 40 suitable for use with the described solution. The vehicle 40 comprises a plurality of sensor units 41, e.g. a camera, a radar sensor, and an ultra-sound sensor. Of course, other types of sensor units may likewise be used, such as a laser scanner or a lidar sensor. Further components of the vehicle 40 are a maneuvering controller 42 configured to initiate and control autonomous driving maneuvers. A data transmission unit 43 is provided for transmitting sensor data of the various sensor units 41 to an external entity and to receive maneuvering information from the external entity. For this purpose the data transmission unit 43 may make use of known communication technologies, such as IEEE802.11p or 3GPP C-V2X. For storing data, a local storage unit 44 is provided. Data exchange between the components of the vehicle 40 is performed via a network 45.

Fig. 5 schematically illustrates a system diagram of a solution for controlling an at least partially autonomous vehicle 40. In this example, the solution is implemented in a managed parking space as an example of a vehicle service facility 60. The parking space is equipped with a plurality of sensor units 61, e.g. radar sensors, lidar sensors, or cameras. Environment data El of these sensor units 61 are provided to a control unit 20, which is provided as part of the infrastructure of the managed parking space. A management unit 62 of the managed parking space may decide to move individual vehicles around, e.g. in order to optimize the parking space, or to fetch the vehicles from or bring the vehicles to their respective drivers. In the example in Fig. 5, one vehicle 40 is to be moved, whereas three further vehicles 50 remain parked. In order to complement or even at least partly replace the sensor units 61 of the managed parking space, the control unit 20 receives environment data EE from the on-board sensor units 41 of the vehicle 40 to be moved. This environment data EE allows the control unit 20 to "zoom-in" around this vehicle 40. The additional environment data EE can be used for a more precise and reliable navigation inside the parking space, since the vehicle 40 can provide its very precise measurements of the park-distance-control sensors to the control unit 20 of the parking space. The control unit 20 is thus aware of the exact distance to other parked vehicles 50, or to pillars and walls. The control unit 20 may further receive environment data EV from sensor units 51 of at least one of the other parked vehicles 50 to further increase the amount of data available for determining driving maneuvers. Based on the available data, the control unit 20 determines maneuvering information MI for the vehicle 40 to be moved. This maneuvering information MI is then provided to the vehicle 40. The maneuvering information MI may, for example, include a trajectory, speed information or steering information. The vehicle 40 may then perform driving maneuvers based on the maneuvering information MI. Preferably, these driving maneuvers are fully controlled by the control unit 20.

In this scenario, data provided by multiple vehicles 40, 50 may be used to verify measurements or to increase the accuracy of measurements. Consider, for example, two vehicles 50 that are parked close to one another. If both vehicles 50 provide measurement data for the distance between them, the control unit 20 can corroborate the information coming from these two unrelated sources and have a maximum accuracy for that individual location. This can be extended to all the parked vehicles 50, which allows the control unit 20 to not only view a situation from the viewpoint of the vehicle 40 to be moved, but to also see this situation from different angles. If sufficient vehicles 50 configured to provide environment data EV of their respective sensor units 51 are parked in the parking space, the control unit 20 can even disregard the sensor units 61 of the parking space and simply monitor moving vehicles 40 through the ultra sound sensors of the already parked vehicles 50.

Further examples of vehicle service facilities are charging stations or filling stations, where the described solution can be used to precisely place individual autonomous or semiautonomous vehicles on inductive charging stations or in a desired position with regard to a charging post or a fuel dispenser.

Yet another example of a vehicle service facility is a car wash. A car wash may use a number of sensors, e.g. a laser scanner or light-sensors, for detecting the contour of the vehicle and moving the vehicle through the washing equipment or moving the washing equipment around the vehicle. In this case, the sensor units of the vehicle can be used to zoom-in around the vehicle to optimally place the washing equipment and verify the information provided by the own sensors of the car wash. Only when the data provided by the two unrelated sources match, it is safe to move the equipment closer to the vehicle. In case the vehicle is moving through the car wash, the sensor data of the vehicle can be used to maneuver the vehicle around the equipment.

### List of Reference Numerals

- 10: Receive environment data from at least one external sensor unit
- 11: Receive environment data from at least one vehicle sensor unit
- 12: Verify information received from a sensor unit
- 13: Fuse information received from two or more sensor units
- 14: Determine maneuvering information for the vehicle
- 15: Transmit maneuvering information to the vehicle
- 20: Control unit
- 21: Input
- 22: Receiving unit
- 23: Processing unit
- 24: Transmission unit
- 25: Controller
- 26: Storage unit
- 27: Output
- 28: User interface
- 30: Control unit
- 31: Processing device
- 32: Memory device
- 33: Input
- 34: Output
- 40: Vehicle
- 41: Sensor unit
- 42: Maneuvering controller
- 43: Data transmission unit
- 44: Local storage unit
- 45: Network
- 50: Further vehicle
- 51: Sensor unit
- 60: Vehicle service facility
- 61: Sensor unit
- 62: Management unit

## Claims

1. A method for controlling an at least partially autonomous vehicle (40), the method being implemented in a control unit (20) external to the vehicle (40), comprising the steps of:
- receiving (10) environment data (El, EV) from at least one sensor unit (51, 61) external to the vehicle (40);
- receiving (11) environment data (EE) from at least one sensor unit (41) of the vehicle (40);
- determining (14) maneuvering information (MI) for the vehicle (40) based at least on the received environment data (EE, EI, EV); and
- transmitting (15) the maneuvering information (MI) to the vehicle (40).

2. The method according to claim 1, wherein the sensor unit (X) external to the vehicle (40) is a sensor unit (51) of a further vehicle (50) or a sensor unit (61) of a vehicle service facility (60).

3. The method according to claim 2, wherein the vehicle service facility (60) is one of a parking facility, a car wash, a filling station or a charging station for electric vehicles.

4. The method according to any of the preceding claims, wherein the maneuvering information (MI) includes at least one of a trajectory, speed information and steering information.

5. The method according to any of the preceding claims, further comprising verifying (12) information received from a sensor unit (41, 51, 61) based on information received from at least one other sensor unit (41, 51, 61).

6. The method according to any of the preceding claims, further comprising fusing (13) information received from two or more sensor units (41, 51, 61).

7. The method according to any of the preceding claims, wherein the sensor unit (41, 51, 61) is one of a camera, a laser scanner, a radar sensor, a lidar sensor, and an ultra-sound sensor.

8. A computer program comprising instructions, which, when executed by the computer, cause the computer to perform a method according to any of claims 1 to 7 for controlling an at least partially autonomous vehicle (40).

9. A control unit (20) for controlling an at least partially autonomous vehicle (40), the control unit (20) comprising:
- a receiving unit (22) configured to receive (10) environment data (El, EV) from at least one sensor unit (51, 61) external to the vehicle (40) and to receive (11) environment data (EE) from at least one sensor unit (41) of the vehicle (40);
- a processing unit (23) configured to determine maneuvering information (MI) for the vehicle (40) based at least on the received environment data (EE, EI, EV); and
- a transmission unit (24) configured to transmit the maneuvering information (MI) to the vehicle (40).

10. A system comprising an at least partially autonomous vehicle (40) and a control unit (20) for controlling the at least partially autonomous vehicle (40).
